(19) Europäisches Patentamt
European Patent Office
Office européen des brevets

(11) Veröffentlichungsnummer: **0 040 645**
**B1**

(12) **EUROPÄISCHE PATENTSCHRIFT**

(45) Veröffentlichungstag der Patentschrift:
31.07.85

(21) Anmeldenummer: 80107439.4

(22) Anmeldetag: 27.11.80

(51) Int. Cl.⁴: **C 08 K 3/20**, C 08 K 5/09,
B 01 J 2/28 // C08L27/06

(54) Verfahren zum Herstellen von nichtstaubenden Metallsalzen und/oder -seifen.

(30) Priorität: 28.05.80 DE 3020255

(43) Veröffentlichungstag der Anmeldung:
02.12.81 Patentblatt 81/48

(45) Bekanntmachung des Hinweises auf die Patenterteilung:
31.07.85 Patentblatt 85/31

(84) Benannte Vertragsstaaten:
AT BE CH DE FR GB IT LI LU NL SE

(56) Entgegenhaltungen:
DE - A - 1 542 068
DE - A - 1 792 098
DE - A - 2 613 249
DE - A - 2 823 002
DE - B - 1 569 190
DE - B - 2 124 040
DE - C - 1 544 697

(73) Patentinhaber: Chemische Werke München Otto
Bärlocher GmbH, Riesstrasse 16,
D-8000 München 50 (DE)

(72) Erfinder: Rosenthal, Christian, Dr., Riesstrasse 16,
D-8000 München 50 (DE)
Erfinder: Rieber, Gernot, Dr. Dipl.-Chem.,
Hofbauernstrasse 1a, D-8000 München 60 (DE)
Erfinder: Pürzer, Albert, Dr. Dipl.-Chem., Schleissheimer
Strasse 182, D-8000 München 40 (DE)
Erfinder: Hacker, Peter, Zaubzerstrasse 42,
D-8000 München 80 (DE)

(74) Vertreter: Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 58, D-8000 München 22 (DE)

## Beschreibung

Die Erfindung betrifft ein Verfahren zum Herstellen von nichtstaubenden, gleitmittelarmen, basischen und/oder neutralen Metallsalzen und/oder -seifen oder deren Gemischen in Form von Granulaten oder verdichteten Pulvern durch Umsetzen mindestens eines Metalloxids und/oder -hydroxids und/oder -carbonats mit mindestens einer anorganischen Säure und/oder organischen Säure in Gegenwart von Wasser.

Metallsalze und -seifen haben, insbesondere zur Stabilisierung von Kunststoffen, eine große wirtschaftliche Bedeutung erlangt und werden einzeln oder als Gemische, zum Teil auch in Verbindung mit organischen Gleitmitteln und/oder Antioxidantien, Komplexbildnern, Füllstoffen und Pigmenten verwendet.

Es ist bekannt, Metallseifen nach dem sogenannten Schmelzverfahren herzustellen, wobei die organische Säure mit dem Metalloxid, -hydroxid oder -carbonat bei höherer Temperatur umgesetzt wird. So hergestellte Schmelzen von Metallseifen liefern nach dem Abkühlen und Vermahlen relativ schwere und schlecht verteilbare Endprodukte.

Eine Großzahl der bekannten Metallseifen und -salze, beispielsweise die Bleiverbindungen, sind im allgemeinen stark toxisch, so daß bei der Herstellung und Verarbeitung von Metallsalzen und -seifen insbesondere wenn diese in fein verteilter und staubender Form vorliegen, ernsthafte Toxizitätsprobleme auftreten. Wegen ihrer gesundheitsschädlichen Eigenschaften werden diese Produkte deshalb zum Teil nachträglich mit Weichmachern und ähnlichen, bei der Kunststoffverarbeitung üblicherweise eingesetzten Produkten vermischt, um die Staubbildung gering zu halten.

Aus der DE-PS 1 544 697 ist es bekannt, eine Stabilisatoren-Gleitmittel-Kombination aus Metallseifen, -salzen und Gleitmittel in einer nichtstaubenden Form dadurch herzustellen, daß man in Gegenwart von Gleitmitteln die Metallseifen nach einem Schmelzverfahren herstellt und basische Bleisalze anorganischer oder organischer Säuren in diese Schmelzen einrührt. Die nach diesem Verfahren hergestellten Schmelzen werden in einem weiteren Arbeitsschritt entweder durch Abschuppen über Kühlwalzen oder Kühlbänder oder durch Versprühen in schuppenförmige oder kugelförmige Granulate übergeführt.

Aus der DE-AS 1 569 190 ist ein ähnliches Verfahren zur Herstellung einer nichtstaubenden Stabilisator-Gleitmittel-Kombination bekannt, bei dem eine Metallseife nach dem Schmelzverfahren hergestellt wird, hierin ein Erdalkali- bzw. Schwermetallsalz dispergiert wird, wobei gegebenenfalls zur Verminderung der Schmelzviskosität ein organisches Gleitmittel zugegeben wird. Auch nach diesem Verfahren werden die so hergestellten Schmelzen in einem zusätzlichen Arbeitsschritt in Granulate übergeführt.

Aus der DE-OS 2 613 249 ist weiterhin ein Verfahren zur Herstellung einer nichtstaubenden Stabilisator-Kombination bekannt, bei dem in der Schmelze einer Metallseife bei Temperaturen von vorzugsweise 130 bis 160°C ein basisches Bleisalz durch Umsetzung von Bleioxid, -hydroxid oder -carbonat mit wäßriger, anorganischer Säure gebildet wird. Die so hergestellte Masse wird entweder als solche in Blockform zur Erstarrung gebracht oder in einem zusätzlichen Arbeitsgang zerstäubt oder über Kühlwalzen abgeschuppt.

Schließlich ist es bekannt, die Metallsalze und -seifen durch doppelte Umsetzung in wäßriger Phase nach dem Fällverfahren herzustellen. Hierbei werden zunächst wasserlösliche Alkali- bzw. Erdalkaliseifen hergestellt, diese in großem Überschuß an Wasser mit dem jeweiligen Metallsalz versetzt und die sich bildende, unlösliche Metallseife ausgefällt. Das Fällverfahren führt zu relativ leichten, voluminösen und was besonders nachteilig ist, zu staubigen Produkten.

Die beschriebenen Schmelzverfahren zur Herstellung von nichtstaubenden Granulaten aus einem basischen oder neutralen Metallsalz, einer schmelzbaren Metallseife und einem organischen Bestandteil, der als Gleitmittel dient, sind durchwegs auf die Schmelzbarkeit eines derartigen Gemisches und der dadurch gegebenen Verformbarkeit angewiesen, da für die weitere Granulierung nach dem Sprühverfahren oder der Schuppenbildung über Kühlwalzen oder Kühlbänder das Vorliegen einer fließfähigen, schmelzbaren Masse Voraussetzung ist. Die bekannten Schmelzverfahren sind somit auf Produkte beschränkt, die gemeinsam eine fließbare Schmelze ergeben und die einen Mindestanteil an schmelzbarem Material, in der Regel wesentlich mehr als meist 10 bis 20%, voraussetzen. Damit ist auch die Anwendung dieser Produkte beschränkt, da es zahlreiche Anwendungen gibt, bei denen hohe Bestandteile an schmelzbarem Material nicht erwünscht sind, zum Beispiel für die Fertigung von Fensterprofilen, von Granulaten und ähnlichem. Sämtlichen Schmelzverfahren ist auch gemeinsam, daß die Einarbeitung bzw. Bildung der stabilisierenden Metallsalze oberhalb der Schmelztemperatur der im Gemisch vorhandenen Metallseife erfolgt, wobei Umsetzungstemperaturen von 100 bis 180°C angewandt werden müssen, da die Schmelze weder ganz noch teilweise zum Erstarren kommen darf.

Aufgabe der vorliegenden Erfindung ist es deshalb, ein Verfahren zum Herstellen nichtstaubender Metallseifen und/oder -salzen oder deren Gemischen zur Verfügung zu stellen, welches die Nachteile bekannter Verfahren, insbesondere die Notwendigkeit hoher Verfahrenstemperaturen, großer Gleitmittelanteile sowie zusätzlicher Arbeitsschritte für die Granulatbildung, überwindet und in einfacher und kostensparender Weise direkt zu staubarmen Produkten in Form von Granulaten oder verdichteten Pulvern führt.

Diese Aufgabe wird erfindungsgemäß durch ein Verfahren der eingangs genannten Art dadurch gelöst, daß man die Umsetzung in einem Einstufenverfahren in Gegenwart von gegenüber dem Fällverfahren vergleichsweise geringen Mengen Wasser, wobei die Menge an Wasser unter 50%, bezogen auf das Metalloxid und/oder -hydroxid und/oder -carbonat, beträgt, und geringen Anteilen inerter organischer Substanzen, die einen Schmelzpunkt unter 100° C besitzen und Gleitmittel für Kunststoffe darstellen, wobei man die Menge der inerten organischen Substanzen so wählt, daß weder Reaktionsmasse noch Endprodukt eine fließfähige Schmelze bilden, unter intensivem Durchmischen bei Temperaturen unter 100° C ausführt und anschließend das im Reaktionsgemisch enthaltene Wasser unter Aufrechterhalten des intensiven Durchmischens entfernt.

Überraschenderweise gelingt es mit Hilfe des erfindungsgemäßen Verfahrens ohne den bei den erwähnten bekannten Verfahren durchgeführten Schmelzprozeß und ohne nachträgliche Verformung (Schuppen oder Sprühen) zu einem hochwirksamen Gemisch aus neutralen oder basischen Metallsalzen und/oder -seifen zu gelangen, das in Form von feinen, jedoch staubfreien Granulaten oder schweren, nichtstaubenden Pulvern gewonnen wird. Die erfindungsgemäß hergestellten frei fließenden und gut verteilbaren Granulate können nunmehr bis zu 85% Metall enthalten.

Erfindungsgemäß ist es wesentlich, daß die Umsetzung der Komponenten unter besonders intensivem Durchmischen erfolgt. Zur Erzielung des erfindungsgemäßen Erfolges ist es deshalb erforderlich, schnellumlaufende Rühreinrichtungen zu verwenden, die neben dem Mischen, Homogenisieren und Dispergieren auch eine mechanische Zerkleinerung und Granulierung der im Reaktionsgemisch vorhandenen Bestandteile bewirken.

Es ist somit möglich, in einem einzigen Verfahrensschritt chemische Reaktion und Granulierung durchzuführen.

Bei einer Ausführungsform des erfindungsgemäßen Verfahrens setzt man das Metalloxid, -hydroxid oder -carbonat in Gegenwart von Wasser und geringen Anteilen inerter organischer Substanzen, z. B. Paraffin, und gegebenenfalls Katalysatoren mit der anorganischen und/oder organischen Säure um. Anschließend an die Umsetzung wird unter Aufrechterhalten des intensiven Durchmischens, wobei gleichzeitig eine mechanische Zerkleinerung erfolgt, das Wasser unter vermindertem Druck entfernt.

Bei einer anderen Ausführungsform können, falls erforderlich, die organischen Säuren auch im Anschluß an die Bildung der anorganischen Metallsalze zugegeben werden.

Die inerte organische Substanz besitzt einen Schmelzpunkt unter 100° C und stellt ein Gleitmittel für Kunststoff dar. Beispiele hierfür sind Flüssigparaffine, Paraffinwachse, Fettalkohole und ähnliche.

Die Menge der zugegebenen inerten organischen Substanzen wird so gewählt, daß weder Reaktionsmasse noch Endprodukt eine fließfähige Schmelze bilden. In den meisten Fällen beträgt die Menge der zugegebenen inerten organischen Substanzen unter 5%, bevorzugterweise 3 bis 5%, bezogen auf das Endprodukt.

Für die Durchführung des erfindungsgemäßen Verfahrens ist es weiterhin bevorzugt, daß man mindestens ein Oxid und/oder Hydroxid und/oder Carbonat aus der Gruppe Blei, Cadmium, Calcium, Barium, Zink, Magnesium, Lithium und Strontium einsetzt.

Das erfindungsgemäße Verfahren ist unter Einsatz verschiedener anorganischer oder organischer Säuren durchführbar. Bevorzugte anorganische Säuren sind Schwefelsäure, Phosphorige Säure und Schweflige Säure.

Als organische Säuren können beispielsweise eingesetzt werden gerad- oder verzweigtkettige, gegebenenfalls hydroxylgruppenhaltige Fettsäuren, wie etwa Laurinsäure, Myristinsäure, Palmitinsäure, Stearinsäure, Arachinsäure, aromatische Mono- oder Polycarbonsäuren, wie etwa Benzoesäure, Terephthalsäure, Phthalsäure und ähnliche. Bevorzugt sind aliphatische Carbonsäuren mit etwa 8 bis 22 Kohlenstoffatomen und/oder aromatischen Mono- oder Polycarbonsäuren.

Erfindungsgemäß ist es also möglich, in einem Einstufenverfahren, unter Umgehung der Schmelze, nichtstaubende Granulate oder Pulver herzustellen. Diese sind bei der Verarbeitung hervorragend verteil- und aufschließbar. Erwähnenswert sind ferner die guten Fördereigenschaften. Weiterhin hat das erfindungsgemäße Verfahren gegenüber dem klassischen Fällverfahren den Vorteil, daß keine schwermetallhaltigen Abwässer anfallen, deren Aufarbeitung kostspielige Vorrichtungen erforderlich machen.

Die nachfolgenden Beispiele erläutern die Erfindung.

### Beispiel 1

67,2 kg Bleiglätte, 18,5 kg Stearin, 5,0 kg Paraffin (MP 55° C), 20 l Wasser, 1,0 kg 60%ige Essigsäure bei Raumtemperatur vorlegen, dann 13,4 kg 37%ige Schwefelsäure rasch zugeben und unter fortgesetztem intensivem Mischen aufheizen, 30 Minuten bei 90° C umsetzen, 5,0 kg Bisphenol A einarbeiten und schließlich Wasser entfernen. Man erhält ein nichtstaubendes, gut aufschließbares Granulat mit max. 1% Wasser und max. 1% freie Fettsäuren.

### Beispiel 2

71,2 kg Bleiglätte, 14,6 kg Stearin, 3,0 kg Talgfettalkohol, 25 l Wasser, 1,0 kg 60%ige Essigsäure bei Raumtemperatur vorlegen, dann 15,5 kg 37%ige Schwefelsäure rasch zugeben und unter fortgesetztem intensiven Mischen aufheizen, 30 Minuten bei 90° C umsetzen, einen Teil des Wassers entfernen, 7,0 kg Calciumstearat in die noch plastische Masse einarbeiten und schließlich Restwasser entfernen. Man erhält ein nichtstaubendes, gut aufschließbares Granulat mit max. 1% Wasser und max. 1% freie Fettsäuren.

### Beispiel 3

65,0 kg Bleiglätte, 13,0 kg Stearin, 8,7 kg 70%ige Phosphorige Säure, 2,5 kg Paraffinwachs (MP 55° C), 25 l Wasser, 0,7 kg 60%ige Essigsäure bei Raumtemperatur vorlegen und unter fortgesetztem intensiven Mischen aufheizen, 60 Minuten bei 70° C umsetzen und schließlich Wasser entfernen. Man erhält ein nichtstaubendes, gut aufschließbares Granulat mit max. 1% Wasser und max. 1% freie Fettsäuren.

### Beispiel 4

30,0 kg Bleiglätte, 25,0 kg Stearin, 1,5 kg Paraffinwachs (MP 55° C), 5,0 l Wasser und 0,6 kg 60%ige Essigsäure bei Raumtemperatur vorlegen und unter fortgesetztem intensiven Mischen aufheizen, 60 Minuten bei 60—70° C umsetzen und anschließend Wasser entfernen. Man erhält ein nichtstaubendes, gut aufschließbares Granulat mit max. 1% Wasser und max. 1% freie Fettsäuren.

### Beispiel 5

85,02 kg Bleiglätte, 14,20 kg 70%ige Phosphorige Säure, 3,24 kg Stearin, 3,0 kg Paraffinwachs (MP 55° C), 30 l Wasser und 0,5 kg 60%ige Essigsäure bei Raumtemperatur vorlegen und unter fortgesetztem intensivem Mischen aufheizen, 30 Minuten bei 80° C umsetzen und anschließend Wasser entfernen. Man erhält ein nichtstaubendes, gut aufschließbares Granulat mit max. 1% Wasser.

### Beispiel 6

77,57 kg Bleiglätte, 16,30 kg Phthalsäureanhydrid, 3,24 kg Stearin, 3,0 kg Paraffinwachs (MP 55° C), 30 l Wasser und 0,5 kg 60%ige Essigsäure bei Raumtemperatur vorlegen und unter fortgesetztem intensivem Mischen aufheizen, 30 Minuten bei 80° C umsetzen, dann Wasser entfernen. Man erhält ein nichtstaubendes, gut aufschließbares Granulat mit max. 1% Wasser.

### Beispiel 7

1,4 kg Paraffinöl und 1,3 kg Paraffinwachs (MP 55° C) zusammen mit 50,0 kg Bleiglätte bei 65° C vorlegen. Nach intensivem Vermengen 15 l Wasser und, so rasch wie möglich, 11,9 kg 37%ige Schwefelsäure zugeben. Dann unter fortgesetztem intensivem Mischen bei 90° C umsetzen und anschließend das Wasser entfernen. Man erhält ein schweres, nichtstaubendes, gut aufschließbares Pulver mit Rüttelgewicht von ca. 3000 bis 3500 g/l.

### Beispiel 8

33,8 kg Cadmiumoxid, 62,0 kg Benzoesäure, 5,0 kg Stearin, 4,0 kg Paraffinwachs (MP 55° C), 15,0 l Wasser und 1,0 kg 60%ige Essigsäure bei Raumtemperatur vorlegen, unter fortgesetztem intensivem Mischen aufheizen. 30 Minuten bei 70° C umsetzen und schließlich Wasser entfernen. Man erhält ein nichtstaubendes, gut aufschließbares Granulat.

### Beispiel 9

85,94 kg Bleiglätte, 3,0 kg Paraffinwachs (MP 55° C) bei 65° C vorlegen. Nach intensivem Vermengen 30 l heißes Wasser (65° C), 1,0 kg 60%ige Essigsäure und, so rasch wie möglich, 18,84 kg 37%ige Schwefelsäure zugeben. Unter fortgesetztem intensivem Mischen 15 Minuten bei 90° C umsetzen, 5,55 kg Stearin zugeben, weitere 30 Minuten reagieren lassen und anschließend das Wasser entfernen. Man erhält ein nichtstaubendes, gut aufschließbares Granulat mit max. 1% Wasser und max. 0,5% freie Fettsäuren.

### Beispiel 10

81,1 kg Bleiglätte, 10,0 kg Paraffinwachs (MP 55° C) und 25 l Wasser bei Raumtemperatur vorlegen. 24,1 kg 37%ige Schwefelsäure rasch zugeben und unter fortgesetztem intensiven Mischen aufheizen. 15 Minuten bei 90° C umsetzen und schließlich Wasser entfernen. Man erhält ein nichtstaubendes, gut aufschließbares Granulat mit max. 1% Wasser.

## Patentansprüche

1. Verfahren zum Herstellen von nichtstaubenden, gleitmittelarmen, basischen und/oder neutralen Metallsalzen und/oder -seifen oder deren Gemischen in Form von Granulaten oder verdichteten Pulvern durch Umsetzen mindestens eines Metalloxids und/oder -hydroxids und/oder -carbonats mit mindestens einer anorganischen Säure und/oder organischen Säure in Gegenwart von Wasser, dadurch gekennzeichnet, daß man die Umsetzung in einem Einstufenverfahren in Gegenwart von gegenüber den Fällverfahren vergleichsweisen geringen Mengen Wasser, wobei die Menge an Wasser unter 50%, bezogen auf das Metalloxid und/oder -hydroxid und/oder -carbonat, beträgt, und geringen Anteilen inerter organischer Substanzen, die einen Schmelzpunkt unter 100° C besitzen und Gleitmittel für Kunststoffe darstellen, wobei man die Menge der inerten organischen Substanzen so wählt, daß weder Reaktionsmasse noch Endprodukt eine fließfähige Schmelze bilden, unter intensivem Durchmischen bei Temperaturen unter 100° C, ausführt und anschließend das im Reaktionsgemisch enthaltene Wasser unter Aufrechterhalten des intensiven Durchmischens entfernt.

2. Verfahren nach Anspruch 1, dadurch gekennzeichnet, daß man mindestens ein Oxid und/oder Hydroxid und/oder Carbonat aus der Gruppe Blei, Cadmium, Calcium, Barium, Zink, Magnesium, Lithium und Strontium einsetzt.

3. Verfahren nach Anspruch 1 und/oder 2, dadurch gekennzeichnet, daß man als anorganische Säure Schwefelsäure, Phosphorige Säure oder Schwefelige Säure einsetzt.

4. Verfahren nach einem der Ansprüche 1 bis 3, dadurch gekennzeichnet, daß man als organische Säuren aliphatische Carbonsäuren mit etwa 8 bis 22 Kohlenstoffatomen und/oder aromatische Mono- oder Polycarbonsäuren einsetzt.

## Claims

1. Process for producing non-dusting, low in lubricant, basic and/or neutral metal salts and/or soaps or mixtures thereof in the form of granulates or compressed powders by reacting at least one metal oxide and/or hydroxide and/or carbonate with at least one inorganic acid and/or organic acid in the presence of water, characterised in that the reaction is carried out in a one-stage process in the presence of comparatively small amounts of water in terms of the precipitation process, the amount of water being below 50% related to the metal oxide and/or hydroxide and/or carbonate, and of small amounts of inert organic substances which have a melting point below 100°C and constitute lubricants for plastics, the amount of the inert organic substances being so selected that neither the reaction mass nor the end product constitute a flowable melt, under intensive mixing at temperatures below 100°C, and finally water contained in the reaction mixture is removed while the intensive mixing is maintained.

2. Process according to claim 1, characterised in that at least one oxide and/or hydroxide and/or carbonate from the group lead, cadmium, calcium, barium, zinc, magnesium, lithium and strontium is used.

3. Process according to claim 1 and/or 2, characterised in that sulphuric acid, phosphorous acid or sulphurous acid is used as the inorganic acid.

4. Process according to one of claims 1 to 3, characterised in that aliphatic carboxylic acids with about 8 to 22 carbon atoms and/or aromatic mono or polycarboxylic acids are used as organic acids.

## Revendications

1. Procédé pour la production de sels et/ou savons métalliques non-poussiéreux, pauvres en lubrifiants, basiques et/ou neutres, ou de leurs mélanges sous la forme de granulés ou de poudres condensées, par réaction d'au moins un oxyde et/ou hydroxyde et/ou carbonate métallique avec au moins un acide minéral et/ou un acide organique en présence d'eau, caractérisé en ce que la transformation est assurée en une seule opération, en présence de quantités d'eau minimes comparativement au procédé par précipitation, le pourcentage d'eau étant inférieur à 50% par rapport aux quantités d'oxyde et/ou d'hydroxyde et/ou de carbonate métallique, ainsi que de pourcentages minimes de substances organiques inertes, caractérisées par un point de fusion inférieur à 100°C et représentant un lubrifiant pour plastiques, la quantité retenue de ces substances étant telle, que ni la masse de réaction, ni le produit final, ne forment une masse fondue fluide, un mélange intensif étant assuré à des températures inférieures à 100°C et l'eau contenue dans le mélange de réaction étant ensuite éliminée en maintenant le brassage intensif.

2. Procédé selon la revendication 1, caractérisé par l'utilisation d'au moins un oxyde et/ou hydroxyde et/ou carbonate du groupe plomb, cadmium, calcium, baryum, zinc, magnésium, lithium et strontium.

3. Procédé selon la revendication 1 et/ou 2, caractérisé en ce que les acides minéraux utilisés sont des acides sulfurique, phosphoreux ou sulfureux.

4. Procédé selon une quelconque des revendications 1 à 3, caractérisé en ce que les acides organiques utilisés sont des acides carboxyliques aliphatiques contenant 8 à 22 atomes de carbone et/ou des acides mono- ou polycarboxyliques aromatiques.